(19) Europäisches Patentamt
European Patent Office
Office européen des brevets

(11) **EP 2 840 677 A2**

(12) **EUROPÄISCHE PATENTANMELDUNG**

(43) Veröffentlichungstag:
25.02.2015 Patentblatt 2015/09

(51) Int Cl.:
*H02K 1/24* (2006.01)     *H02K 11/00* (2006.01)
*H02K 19/06* (2006.01)

(21) Anmeldenummer: 14176519.8

(22) Anmeldetag: 10.07.2014

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **17.07.2013 CH 12772013**

(71) Anmelder: **Käch, Alfred
5417 Untersiggenthal (CH)**

(72) Erfinder: **Käch, Alfred
5417 Untersiggenthal (CH)**

(74) Vertreter: **Spierenburg, Pieter
Spierenburg & Partner AG
Patent- und Markenanwälte
Mellingerstrasse 12
5443 Niederrohrdorf (CH)**

(54) **Reluktanzmotor mit Rapid-Antrieb**

(57) Es wird ein Reluktanzmotor (1) beschrieben, welcher aus einem festen Teil, Stator (3) genannt, mit mehreren gleichmässig angeordneten Elektromagneten (6) und aus einem in dessen Zentrum drehbar gelagerten Teil, Rotor (2) genannt, mit mehreren gleichmässig angeordneten, sogenannten Ankern (5), besteht. Es sind Mittel vorhanden, um die Frequenz einer an den Motor angelegten Betriebsspannung zu ändern. Der Stator (3) trägt radial und axial orientierte magnetische Kreise (4) und die Mittel zur Frequenzänderung sind derart ausgebildet, dass bei jedem Polwechsel die Änderung der Betriebsspannung stetig erfolgt. Die Betriebsspannung oder der Betriebsstrom hat nahezu die Form einer symmetrischen Rechteckreihe (Rapid-Antrieb).

Fig. 1

EP 2 840 677 A2

Printed by Jouve, 75001 PARIS (FR)

**Beschreibung**

Die Erfindung betrifft einen Reluktanzmotor nach dem Oberbegriff des Patentanspruchs 1.

STAND DER TECHNIK

Der Reluktanzmotor hat die Bauform eines Elektromotors, bei dem das Drehmoment im Rotor durch die Reluktanzkraft erzeugt wird und nicht durch die Lorentzkraft, wie dies bei durchweg magnetisch erregten Maschinen der Fall ist. Die Maschine ist weder mit Permanentmagneten bestückt noch befinden sich auf dem Rotor elektrische Wicklungen. Der Rotor hat ein- oder ausgeprägte Pole und die Konsole besteht aus einem hochpermeablen, weichmagnetischen Material wie beispielsweise Dynamoblech.

Einphasige Reluktanzmotoren haben eine unterschiedliche Anzahl ausgeprägter Zähne auf Rotor und Stator. Die Statorzähne sind mit Spulen bewickelt, die abwechselnd zu- und abgeschaltet werden, so dass der Rotor ein einsinniges Drehmoment erhält. Im allgemeinen hat ein geschalteter Reluktanzmotor drei oder mehr Phasen. Um im richtigen Moment zuzuschalten, ist in der Regel ein Rotor-lagegeber erforderlich.

Synchron-Reluktanzmotoren sind dreiphasig. Sie tragen auf dem Stator eine normale Dreiphasenwicklung, während der Rotor einen sogenannten "Flusssperrenschnitt" oder ausgeprägte Pole aufweist. Mit dem vom Stator erzeugten Drehfeld erhält der Rotor zufolge der längs des Umfangs unterschiedlichen magnetischen Leitfähigkeiten durch die Reluktanzkraft ein Drehmoment.

NACHTEILE

Beim einphasigen Reluktanzmotor aufwendig ist die unterschiedliche Zahl der Zähne auf Rotor und Stator. Jene müssen ein bestimmtes Verhältnis haben, damit Phasen mit Reluktanzkraft überhaupt auftreten können. Je mehr solche Phasen vorhanden sind, umso kleiner sind die jeweiligen Reluktanzkräfte. Nachteilig ist ferner das Zu- und Abschalten der Magnetspulen. Jedesmal beim Abschalten verschwindet die in den Magneten gespeicherte Feldenergie und wird beim nächsten Zuschalten wieder aufgebaut. Dies erfordert einen zusätzlichen Leistungsaufwand und ein hohes Mass an Blindleistung. Zudem ist bei jedem Schaltprozess kurzzeitig kein Antrieb vorhanden.

Drehfeld-Reluktanzmotoren haben einen grossen Bedarf an Blindleistung. Zudem ist nicht überall Drehstrom vorhanden, z.B. beim Einsatz des Motors in einem Auto. Hinzu kommen mechanische Probleme, beispielsweise bei der Herstellung der Blechschnittgeometrie beim Rotor mit Flussleit- und Flusssperr-Abschnitten.

AUFGABE DER ERFINDUNG

Der vorliegenden Erfindung liegt die Aufgabe zugrunde, einen effizienten Motor zu schaffen, bei welchem die jedem einphasigen Elektromotor anhaftenden Mängel wie der aufwändige Polwechsel und die damit verbundenen kurzfristigen Antriebslücken nicht vorhanden sind.

LÖSUNG DER ERFINDUNG

Diese Aufgabe wird durch einen Reluktanzmotor mit Rapid-Antrieb mit den Merkmalen des Patentanspruchs 1 gelöst.

VORTEILE DER ERFINDUNG

Der erfindungsgemässe Reluktanzmotor hat eine einfache Konstruktion, eine einfache Polsteuerung und minimale Energieverluste.

Die Mittel zur Frequenzänderung sind derart ausgebildet, dass die Änderung der Betriebsspannung stetig von einem positiven Maximum zu einem gleich grossen negativen Maximum und anschliessend umgekehrt erfolgt. Die Betriebsspannung hat nahezu die Form einer symmetrischen Rechteckreihe (Rapid-Antrieb).

Dabei trägt der Rotor längs seines Umfangs ebenso viele sogenannte Anker als magnetische Kreise auf dem Stator vorhanden sind, die beim Poldurchgang die magnetischen Kreise auf dem Stator kurzzeitig über den Luftspalt kurzschliessen, wodurch beim Polwechsel ein einsinniges Drehmoment entsteht.

Die Anker werden durch die magnetischen Wechselfelder des Stators in Verbindung mit der Rotordrehung gegenpolig magnetisiert, welche Polaritäten sie auch beim Umlauf behalten. Jene können daher auch aus Vollmaterial bestehen, vorzugsweise aus einem hartmagnetischen Material. Der gegenseitige Abstand der Anker auf dem Rotor beträgt vorzugsweise 80 bis 100 % der Ankerbreite. Die Konsole der Anker besteht aus einem antimagnetischen Material, beispielsweise Anticorrodal.

Weitere Vorteile der Erfindung folgen aus der nachfolgenden Beschreibung, in welcher die Erfindung anhand eines in den schematischen Zeichnungen dargestellten Ausführungsbeispieles näher erläutert wird. Es zeigt:

Fig. 1     eine Obenansicht auf einen Reluktanzmotor,

Fig. 2     eine Seitenansicht auf den Reluktanzmotor, und

Fig. 3     die Polwechselreihe für den Rapid-Antrieb des Reluktanzmotors.

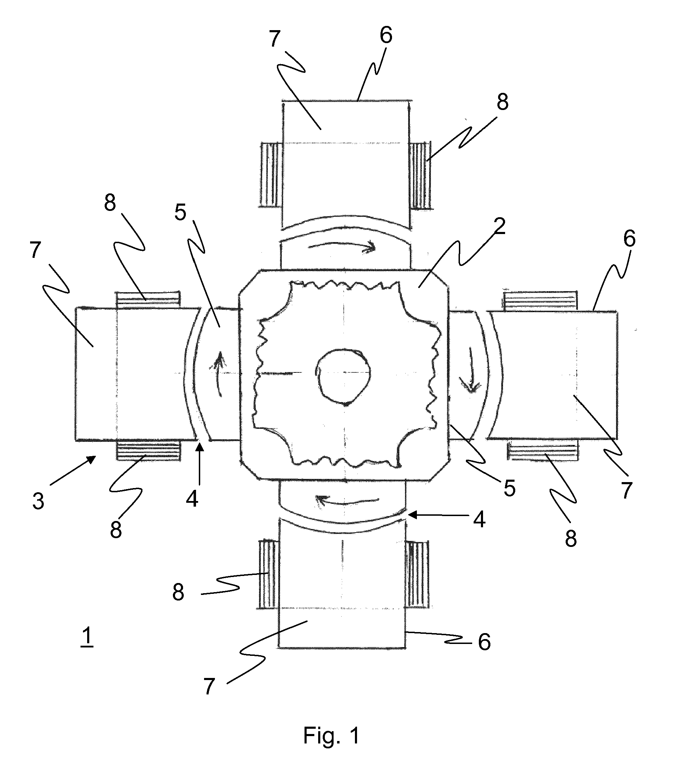

In der Figur 1 ist schematisch im Querschnitt ein Reluktanzmotor 1 mit einem Rotor 2 und einem Stator 3 dargestellt. Auf dem Stator 3 sind vier wechselnd gepolte magnetische Kreise 4 vorhanden, wobei sich Teile 5 mit je der Funktion eines Ankers auf dem Rotor 2 befinden. Der Stator 3 trägt vier gleich ausgebildete Elektromagnete 6 mit jeweils einem U-förmigen Eisenkern 7 und zwei Spulen 8. Die Elektromagnete 6 sind gleichmässig längs eines Kreises um den Rotor 2 angeordnet. Die Betriebsspannung der vier in Serie geschalteten Kreise hat nahezu die Form einer symmetrischen Rechteckreihe. Sobald die gleich ausgebildeten und gleichmässig auf einem Kreis angeordneten Anker 5 auf dem Rotor in die Nähe der Statormagnete oder Elektromagnete 6 kommen, setzen Zugkräfte ein, wodurch ein einsinniges Drehmoment entsteht. Sobald diese Anker 5 den jeweiligen magnetischen Kreis vollständig schliessen, wird umgepolt. Jeder Anker 5 auf dem Rotor 2 wird dann vom betreffenden Statormagneten 6 abgestossen und zugleich vom nächstfolgenden Statormagneten 6 angezogen. Die Polarisierung der Anker oder Rotormagnete 4 kommt von den Statormagneten 6. Sie sind gegengepolt, behalten jedoch ihre Polarität beim Umlauf des Rotors.

Die gegengepolten Elektromagnete 6 auf dem Stator 3 sind in radialer und axialer Richtung orientiert. Die Spulen 8 auf den Schenkeln der U-förmigen Eisenkerne 7 sind Teil der magnetischen Kreise 4, die den Antrieb des Rotors 2 bewirken. Die Schenkel 7 tragen je zwei ausgeprägte Polköpfe 9, die zum Rotordurchmesser passende, kreisförmige Ausnehmungen aufweisen.

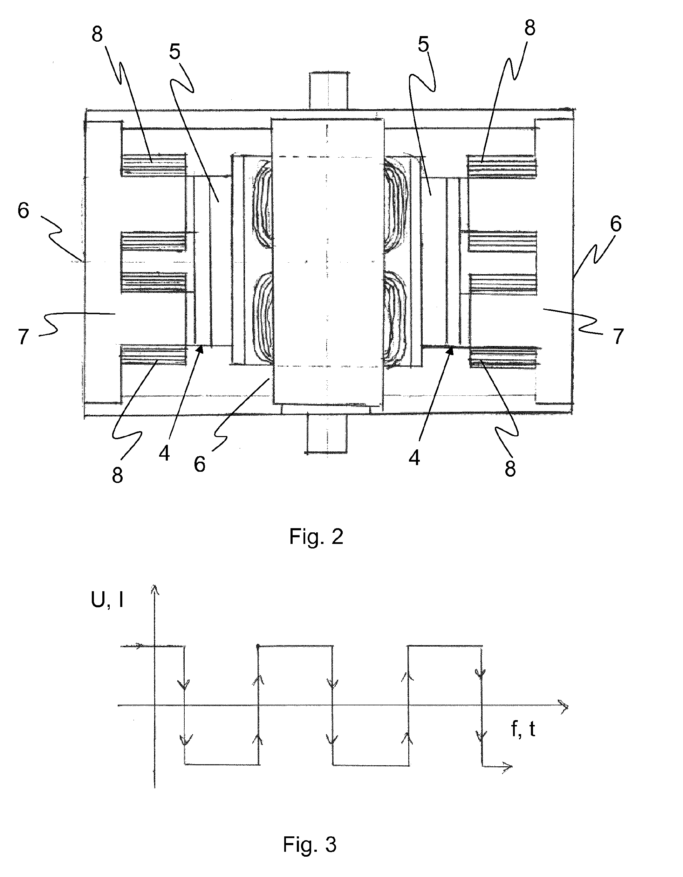

Der Polwechsel in den Statormagneten 6 erfolgt gemäss einer rechteckigförmigen Spannungs- bzw. Stromansteuerung wie in Figur 3 gezeigt. Diese Antriebsart wird als Rapid-Antrieb bezeichnet.

Bei Speisung mit einem Wechselstrom entsteht in den Statormagneten 6 ein stehendes Wechselfeld. Dieses entspricht zwei gegenläufigen Drehfeldern, deren Drehzahl von der Polzahl und der Betriebsfrequenz der Wechselspannung abhängt. Wird der Rotor 2 durch einen nicht-gezeigten Motor in einer Richtung angeworfen, so beginnt sich der Rotor 2, etwa bei der halben synchronen Drehzahl, durch die Reluktanzkraft, d.h. den kleinsten magnetischen Widerstand, selbst zu synchronisieren. Bei Änderung der Frequenz ändert sich auch die Drehzahl. Man kann in einem grösseren Bereich jede Drehzahl einstellen.

Die magnetisch leitenden Teile auf dem Rotor 2 bestehen aus so vielen Anker 5 auf einer antimagnetischen Konsole, als auf dem Stator 3 magnetische Kreise vorhanden sind. Die Konsole besteht aus einem antimagnetischen Material, vorzugsweise Anticorrodal. Die Anker 5 decken, kurz vor dem Polwechsel, die Polflächen aller magnetischen Kreise auf dem Stator 3 vollständig ab. Beim Überdeckungsvorgang entstehen auf dem Rotor 2 tangentiale Zugkräfte, die zum Antrieb beitragen. Nach dem Polwechsel wird jeder Anker 5 auf dem Rotor 2 vom betreffenden Statormagneten 6 abgestossen und zugleich vom nächstfolgenden Statormagneten 6 angezogen: ein weiterer Beitrag zum Drehmoment. Hierzu muss der Abstand zwischen den Ankern 5 oder anders gesagt die Breite der Pollücken etwa 80 bis 100 % der Ankerbreite betragen.

Die Anker 5 werden durch die Magnetfelder der magnetischen Kreise 4 auf dem Stator 3 in Verbindung mit der Rotordrehung gegenpolig magnetisiert, welche Polaritäten sie auch beim Umlauf des Rotors 2 beibehalten. Jene können daher auch aus Vollmaterial bestehen, beispielsweise aus hartmagnetischem Eisen.

Die in den Spulen 8 der Elektromagnete 6 gespeicherte Feldenergie wird mit der Formel:

$$W = \tfrac{1}{2} \cdot L \cdot i^2$$

bestimmt, wobei L die Induktivität der Spule 8 und i der Höchstwert des jeweils fliessenden Stroms bedeutet. Die im Elektromagneten 6 gespeicherte Energie ist von der Stromstärke im Quadrat bestimmt. Demnach benötigt ein schneller Polwechsel von z.B. einem positiven Strommaximum zu einem gleich grossen negativen Strommaximum nahezu keine zusätzliche Energie. Bei einem Reluktanzmotor mit dem erfindungsgemässen Rapid-Antrieb sind diese gegenphasigen Strommaxima gleich gross und zeitlich gleich lang. Der Betriebsstrom hat nahezu die Form einer symmetrischen Rechteckreihe wie in Figur 3 gezeigt.

Da die Anzahl der Anker 5 auf dem Rotor 2 gleich der Zahl der magnetischen Kreise 4 auf dem Stator 3 ist, korreliert bei einer einzigen Umdrehung des Rotors 2 jeder Anker 5 mit jedem magnetischen Kreis 4. Die Leistung des Reluktanzmotors 1 steigt somit im Quadrat mit der Polzahl, was speziell für tiefe Dreh-zahlen wichtig ist.

Bei den herkömmlichen Elektromotoren sind die Triebmagnete bezüglich der Rotordrehung in Serie auf dem Stator angeordnet. Beim vorliegenden Reluktanzmotor 1 sind die Elektromagnete 6, auch als Trieb- oder Statormagnete bezeichnet, hingegen parallel angeordnet. Dadurch kann man, bei einem leicht grösseren Bauvolumen des Reluktanzmotors 1, die doppelte Anzahl Statormagnete 6 anbringen als bei den herkömmlichen Elektromotoren.

**Patentansprüche**

1. Reluktanzmotor (1), bestehend aus einem festen Teil, Stator (3) genannt, mit mehreren gleichmässig angeordneten Elektromagneten (6) und einem in dessen Zentrum drehbar gelagerten Teil, Rotor (2) genannt, mit mehreren gleichmässig angeordneten sogenannten Anker (5), wobei Mittel vorhanden sind, um die Frequenz einer an den Motor angelegten Betriebsspannung zu ändern, **dadurch gekennzeichnet, dass** der Stator (3) axial und radial orientierte magnetische Kreise (4) trägt und die Mittel zur Frequenzänderung derart ausgebildet sind, dass bei jedem Polwechsel die Änderung der Betriebsspannung stetig erfolgt.

2.  Reluktanzmotor nach Anspruch 1, **dadurch gekennzeichnet, dass** die Anker (5), welche den Elektromagneten (6) auf dem Stator zugeordnet sind, analog zu denen auf dem Rotor (2) angebracht sind.

3.  Reluktanzmotor nach Anspruch 2, **dadurch gekennzeichnet, dass** die längs des Rotorumfanges vorhandenen Anker (5) beim Poldurchgang die magnetischen Kreise (4) auf dem Stator (3) über den Luftspalt kurzschliessen, wodurch ein durchgehend einsinniges Drehmoment entsteht.

4.  Reluktanzmotor nach einem der Ansprüche 1 bis 3, **dadurch gekennzeichnet, dass** die Mittel zur Frequenzänderung derart ausgebildet sind, dass die Änderung der Betriebsspannung stetig von einem positiven Maximum zu einem gleich grossen negativen Maximum und anschliessend umgekehrt erfolgt.

5.  Reluktanzmotor nach Anspruch 4, **dadurch gekennzeichnet, dass** die Mittel zur Frequenzänderung derart ausgebildet sind, dass die Betriebsspannung nahezu die Form einer symmetrischen Rechteckreihe hat.

6.  Reluktanzmotor nach einem der Ansprüche 1 bis 5, **dadurch gekennzeichnet, dass** die auf dem Stator (3) längs des Luftspaltes vorhandenen magnetischen Kreise (4) gegengepolt sind.

7.  Reluktanzmotor nach einem der Ansprüche 1 bis 6, **dadurch gekennzeichnet, dass** die Anker (5) auf dem Rotor (2) aus Vollmaterial bestehen, vorzugsweise aus einem hartmagnetischen Material.

8.  Reluktanzmotor nach einem der Ansprüche 1 bis 7, **dadurch gekennzeichnet, dass** der Rotor (3) eine Konsole eines antimagnetischen Material aufweist.

9.  Reluktanzmotor nach einem der Ansprüche 1 bis 8, **dadurch gekennzeichnet, dass** die auf dem Stator (3) längs des Luftsspaltes vorhandenen magnetischen Kreise (4) gegengepolt sind.

10. Reluktanzmotor nach einem der Ansprüche 1 bis 9, **dadurch gekennzeichnet, dass** der Abstand zwischen angrenzenden Ankern (5) etwa 80 bis 100% der Breite der Anker (5) beträgt.

Fig. 1

Fig. 2

Fig. 3